# FASCICULE DE BREVET EUROPEEN

(11) **EP 2 974 893 B1**
(45) Date de publication et mention de la délivrance du brevet: **21.12.2016**
(21) Numéro de dépôt: 15175087.4
(22) Date de dépôt: 02.07.2015
(51) Int. Cl.: B60D 1/54, B60D 1/50, B60D 1/04

(54) **DISPOSITIF DE REMORQUAGE ET VÉHICULE ÉQUIPÉ D'UN TEL DISPOSITIF DE REMORQUAGE**
SCHLEPPVORRICHTUNG UND FAHRZEUG, DAS MIT EINER SOLCHEN SCHLEPPVORRICHTUNG AUSGESTATTET IST
TOWING DEVICE AND VEHICLE PROVIDED WITH SUCH A TOWING DEVICE

(30) Priorité: 03.07.2014 FR 1401570
(43) Date de publication de la demande: 20.01.2016
(73) Titulaire: NEXTER Systems, 42328 Roanne (FR)
(72) Inventeur: BERTRAND, Ludovic, 18023 BOURGES (FR)
(74) Mandataire: Debay, Yves

(56) Documents cités:
- US-A- 3 375 946
- US-A- 4 252 373
- US-A1- 2014 110 417

## Description

Le domaine technique de l'invention est celui des dispositifs de remorquage équipant les véhicules et plus particulièrement les véhicules dotés d'une rampe d'accès arrière basculante.

Il est classique de doter un véhicule d'un dispositif de remorquage comportant un crochet fixe attaché au niveau d'une partie arrière du châssis.

Les véhicules dotés d'une rampe d'accès arrière, et en particulier les véhicules de combat blindés, ne peuvent pas aisément être dotés d'un crochet de remorquage.

En effet, il n'est pas possible de fixer un crochet de façon fixe en dessous de la rampe car cette dernière interférera avec lui lors de l'ouverture.

Le crochet doit donc être démontable, ce qui pose d'autres problèmes, car la masse des crochets pour les véhicules blindés est imposante (près de 40 kg). Il en résulte des opérations longues et pénibles.

Par ailleurs une fois le crochet fixé les mouvements de la rampe sont limités voire impossibles, ce qui réduit les capacités opérationnelles du véhicule.

Si le crochet est fixé à la rampe elle-même, l'effort mécanique pouvant passer par le crochet est limité. La rampe peut se déformer ou se détacher du châssis.

Le brevet EP1995550 qui sert de base au préambule de la revendication principale décrit un crochet qui est solidaire d'un support destiné à être monté pivotant par rapport à la caisse. Le support comporte une paire de bras inférieurs qui sont articulés au niveau de l'axe de pivot de la rampe. Il comporte aussi une paire de bras supérieurs qui traversent la rampe et qui sont fixés par des vis au niveau d'une paroi arrière de la caisse.

Lorsque l'on souhaite utiliser la rampe, il est donc nécessaire de dévisser les bras supérieurs et le crochet pivote ensuite avec la rampe.

Si on souhaite utiliser le crochet, on visse les bras supérieurs. Les efforts de traction sont alors communiqués par le crochet directement à la caisse et la rampe n'est pas déformée.

L'inconvénient de ce dispositif est que la rampe se trouve condamnée lorsque les bras supérieurs sont fixés.

Même s'il n'est plus nécessaire de soulever ou manipuler l'ensemble du dispositif de remorquage, il est ici toujours indispensable de procéder à une opération de vissage ou dévissage pour utiliser ou neutraliser le crochet de remorquage.

On connaît aussi par le brevet US3375946 un véhicule de transport d'autres véhicules et qui comporte une rampe arrière abaissable et qui porte également un crochet de remorquage. Dans ce véhicule la rampe est relativement proche du sol et a un débattement réduit, ce qui limite les risques d'interférences avec le crochet de remorquage.

L'invention a pour but de résoudre les problèmes rencontrés avec l'art antérieur.

En particulier, le dispositif de remorquage selon l'invention est utilisable ou neutralisable à tout instant sans opération de montage ou démontage.

Parallèlement la rampe arrière du véhicule reste opérationnelle sans qu'il soit nécessaire de démonter le dispositif de remorquage.

Ainsi l'invention a pour objet un dispositif de remorquage pour un véhicule doté d'une rampe d'accès arrière montée basculante par rapport à une caisse du véhicule sur des charnières ayant un axe horizontal, ou axe de rampe, dispositif de remorquage comportant un crochet qui est solidaire d'un support qui est destiné à être monté pivotant par rapport à la caisse, dispositif caractérisé en ce que :
- le support affecte la forme d'un bloc sur lequel est fixé le crochet, bloc destiné à être monté pivotant par rapport à la caisse au niveau d'un axe de pivot du support qui est destiné à être monté de façon coaxiale à l'axe de la rampe, et
- le support est destiné à être relié à la caisse par l'intermédiaire d'au moins une genouillère constituée par deux bielles articulées entre elles au niveau d'un premier axe, une première bielle étant articulée par rapport à la caisse au niveau d'un deuxième axe et une deuxième bielle étant articulée par rapport au support au niveau d'un troisième axe disposé en dessous de l'axe de pivot, les premier, deuxième et troisième axes étant tous parallèles à l'axe de pivot du support, et
- la deuxième bielle porte au moins un ergot venant en butée contre au moins une forme de commande solidaire de la rampe et disposée entre l'axe de pivot de support et le troisième axe, et
- les positions des différents axes sont choisies telles que, lorsque le dispositif est fixé à un véhicule la rampe est fermée, le support de crochet est sensiblement vertical et les bielles forment un angle inférieur à 180°, le triangle dont les sommets sont les axes géométriques des premier, deuxième et troisième axes ayant ainsi son sommet correspondant au premier axe qui est orienté vers l'axe de pivot du support, et
- l'ouverture de la rampe provoque, par l'intermédiaire de la ou des formes de commande, une ouverture de la genouillère avec un angle des bielles supérieur à 180°, le triangle dont les sommets sont les axes géométriques des premier, deuxième et troisième axes ayant ainsi son sommet correspondant au premier axe qui est orienté à l'opposé de l'axe de pivot du support, la rampe coopérant par ailleurs lors de son ouverture avec une butée du support de crochet entraînant le pivotement du support avec la rampe.

Avantageusement au moins un premier ressort de rappel pourra relier la rampe et le support et permettra d'assurer, lors de la fermeture et de l'ouverture de la rampe, le contact de celle-ci avec la butée du support.

Le dispositif pourra comporter un socle destiné à être fixé au niveau d'une paroi inférieure de la caisse, socle comportant au moins un palier avant recevant l'axe de pivot du support et au moins un palier arrière recevant la première bielle.

La forme de commande sera avantageusement solidaire d'une plaque destinée à être rendue solidaire de la rampe du véhicule.

Selon un mode de réalisation, la forme de commande pourra comporter deux languettes parallèles, l'ergot se positionnant entre les deux languettes.

Selon un autre mode de réalisation, les deux languettes pourront être mobiles l'une par rapport à l'autre et reliées par un ressort dimensionné pour ramener, en position rampe fermée et en l'absence d'effort de traction, la genouillère avec un angle des bielles inférieur à 180°, le triangle dont les sommets sont les axes géométriques des premier, deuxième et troisième axes ayant ainsi son sommet correspondant au premier axe qui est orienté vers l'axe de pivot du support.

Selon un autre mode de réalisation, la forme de commande pourra ne comporter qu'une languette coopérant avec l'ergot, au moins un second ressort de rappel étant prévu au niveau de la genouillère pour assurer le positionnement de celle-ci avec un angle des bielles inférieur à 180°, le triangle dont les sommets sont les axes géométriques des premier, deuxième et troisième axes ayant ainsi son sommet correspondant au premier axe qui est orienté vers l'axe de pivot du support, lorsque la rampe est en position fermée.

Le second ressort pourra être un ressort de torsion disposé au niveau du premier axe d'articulation des bielles.

Le second ressort pourra être un ressort de traction disposé entre la première bielle et le socle.

L'invention a également pour objet un véhicule doté d'une rampe d'accès arrière montée basculante par rapport à une caisse du véhicule sur des charnières ayant un axe horizontal, ou axe de rampe, véhicule comportant un tel dispositif de remorquage.

L'invention sera mieux comprise à la lecture de la description qui va suivre de modes particuliers de réalisation, description faite en référence aux dessins annexés et dans lesquels :
- La figure 1 est une vue latérale schématique de l'arrière d'un véhicule selon l'invention.
- La figure 2 est une vue partielle en perspective arrière d'un véhicule selon l'invention.
- La figure 3 est une vue en perspective latérale droite d'un premier mode de réalisation d'un dispositif de remorquage selon l'invention.
- La figure 4 est une vue latérale schématique de ce premier mode de réalisation.
- La figure 5 est une vue en perspective latérale gauche du premier mode de réalisation du dispositif de remorquage selon l'invention.
- Les figures 6a, 6b, 6c et 6d montrent quatre phases successives de l'ouverture de la rampe, la figure 6a correspondant au début de l'ouverture de rampe, la figure 6b à un instant suivant l'étape selon la figure 6a, la figure 6c correspondant à l'ouverture totale de la rampe et la figure 6d correspondant à la fin de la fermeture de la rampe soit pratiquement à une configuration identique à celle de la figure 6a.
- La figure 7 est une vue schématique d'un second mode de réalisation d'un dispositif de remorquage selon l'invention.
- La figure 8 montre de façon schématique un troisième mode de réalisation d'un dispositif de remorquage selon l'invention.

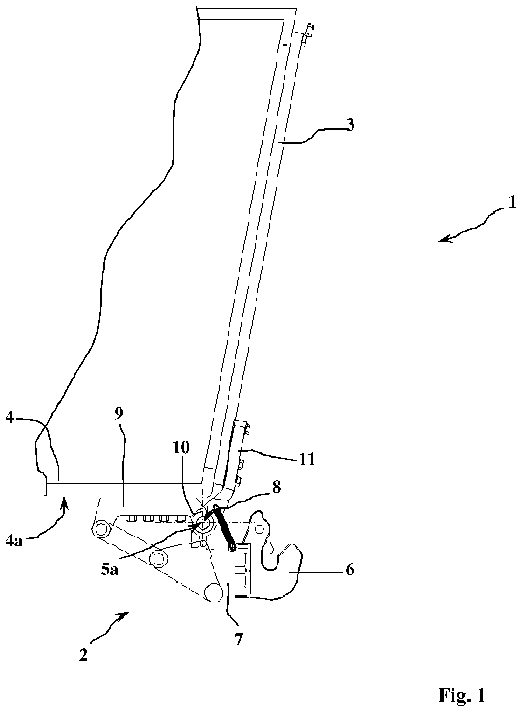

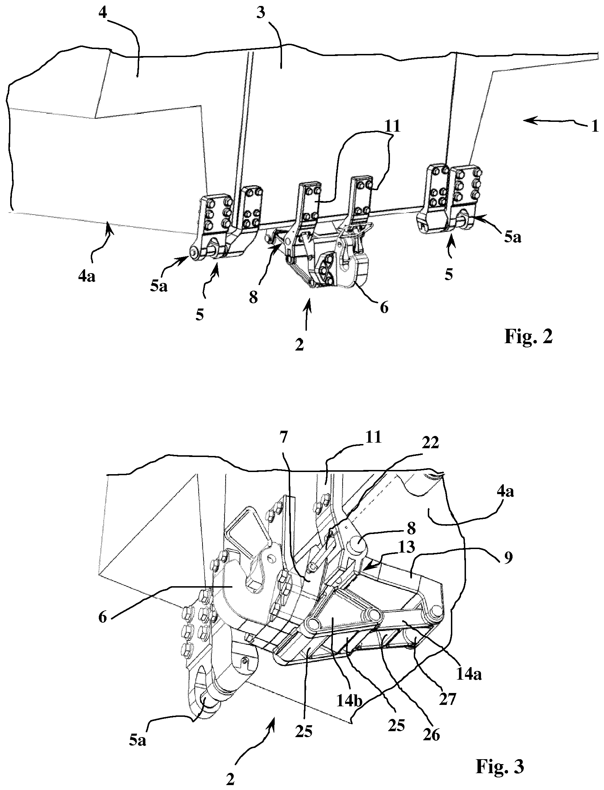

En se reportant aux figures 1 et 2, un véhicule 1 est équipé d'un dispositif de remorquage 2 selon l'invention.

Ce véhicule 1 est doté d'une rampe d'accès arrière 3 qui est montée basculante par rapport à une caisse 4 du véhicule sur des charnières 5 qui ont un axe horizontal 5a (axe de rampe).

Le véhicule 1 n'est pas représenté en entier car seules les caractéristiques relatives à la rampe arrière et au dispositif de remorquage sont visées par l'invention. Le véhicule pourra être par exemple un véhicule blindé à roues, par exemple un véhicule tel que décrit par le brevet FR2977020.

Le dispositif de remorquage 2 comporte un crochet 6 qui est solidaire d'un support 7 qui est destiné à être monté pivotant par rapport à la caisse 4. Comme on le voit ici, le support 7 a la forme d'un bloc sensiblement parallélépipédique sur lequel est fixé le crochet 6 par un moyen classique (par exemple par des boulons traversant le support).

Le bloc formant le support 7 est monté pivotant par rapport à la caisse 4 au niveau d'un axe 8, dit axe de pivot du support, axe 8 qui est coaxial à l'axe 5a de la rampe 3.

Sur la vue latérale de la figure 1 les axes 8 et 5a apparaissent confondus. En réalité, comme on le voit bien sur la figure 2, les charnières 5 de la rampe sont disposées de chaque côté de la rampe 3 alors que le dispositif de remorquage 2 est disposé sensiblement au milieu du bord inférieur de la rampe 3.

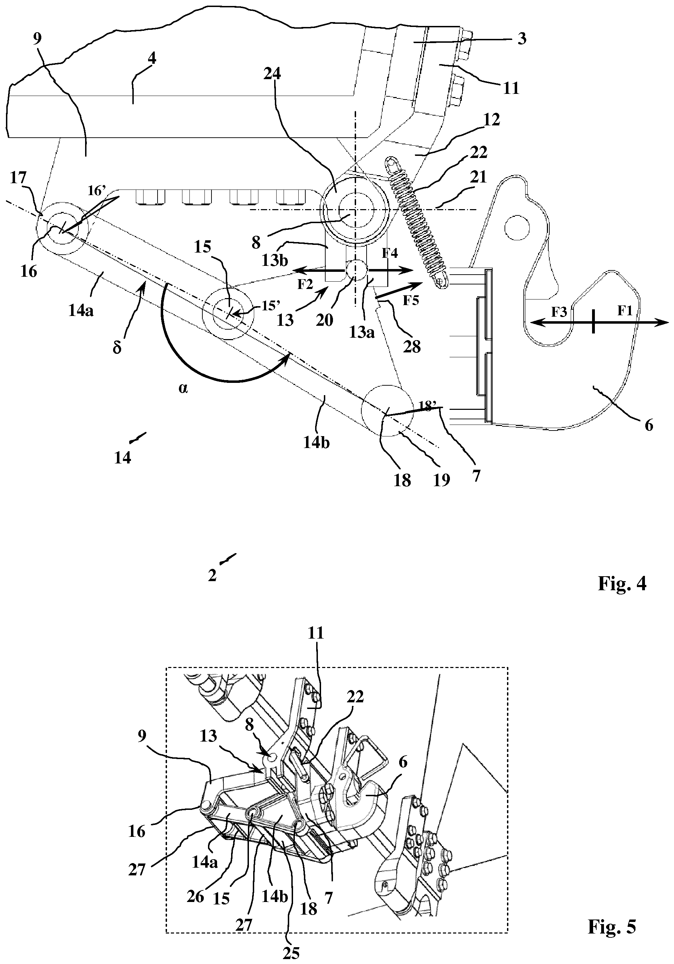

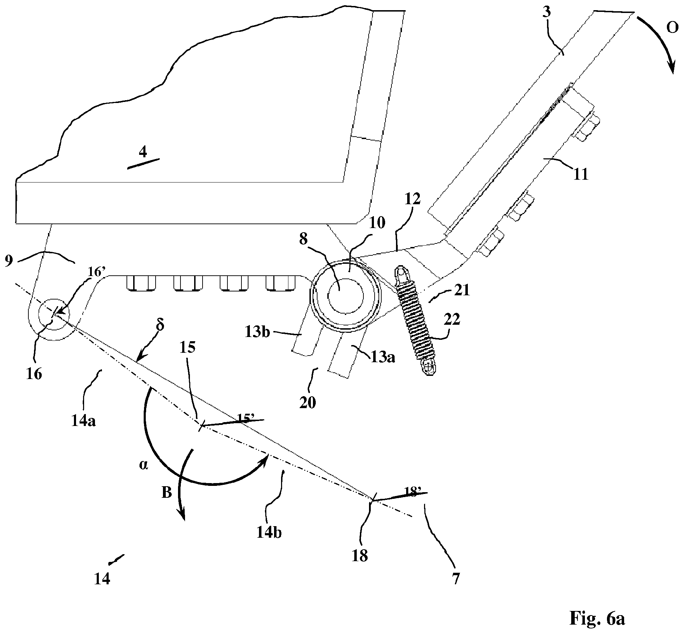

Comme on le voit plus particulièrement sur la figure 4, l'axe 8 de pivot de support est porté par un socle 9 qui est vissé au niveau d'une paroi inférieure 4a de la caisse. Le socle 9 comporte un palier avant 24 recevant l'axe de pivot 8 et qui permet l'articulation du support 7. Le même axe de pivot 8 reçoit un palier 10 pivotant qui est solidaire d'un bras 12 lié à une plaque 11 solidaire de la rampe 3 (figure 6a).

Le bras 12 porte à son extrémité deux languettes parallèles 13a et 13b qui constituent une forme de commande 13 qui est solidaire de la rampe 3 par l'intermédiaire de la plaque 11. La fonction de cette forme 13 sera décrite plus complètement par la suite.

Le support 7 est également relié à la caisse 4 par l'intermédiaire d'au moins une genouillère 14 qui est constituée par deux bielles 14a et 14b qui sont articulées entre elles au niveau d'un premier axe 15. Une première bielle 14a est articulée par rapport à la caisse au niveau d'un deuxième axe 16 qui est disposé dans un palier arrière 17 porté par le socle 9.

Une deuxième bielle 14b est articulée par rapport au support 7 au niveau d'un troisième axe 18 qui se loge dans un palier 19 solidaire du support 7.

Comme on le voit sur les figures, le troisième axe 18 est disposé verticalement en dessous de l'axe de pivot 8 du support 7.

Les différents axes (premier axe 15, deuxième axe 16 et troisième axe 18) sont tous parallèles à l'axe 8 de pivot du support 7.

Ainsi l'ensemble formé par le socle 9, le support 7 et les deux bielles 14a et 14b forme un dispositif déformable dont la déformation dépendra de la possibilité de plier ou non la genouillère 14. Si la genouillère 14 était remplacée par une seule et unique bielle rigide, le dispositif ne serait plus déformable. Le support 7 du crochet 6 resterait de façon fixe dans la position visible à la figure 4. Dans cette position le support 7 est sensiblement vertical.

On remarque que la deuxième bielle 14b a ici la forme d'une plaque triangulaire et porte un ergot 20 qui vient en butée contre la languette 13a (languette avant) de la forme de commande 13. Dans la position rampe fermée de la figure 2, l'ergot 20 se trouve positionné entre les deux languettes 13a et 13b de la forme de commande 13.

La figure 4, qui est une vue latérale, permet de décrire le fonctionnement du dispositif. Concrètement, et compte tenu de la masse du crochet 6 ainsi que des efforts de traction mis en oeuvre, la structure du dispositif 2 visible sur la figure 4 est doublée. Il y a deux plaques 11 solidaires de la rampe (voir les figures 3 et 5), chaque plaque comportant un bras 12 et une forme de commande 13. Il y a également deux paliers 17 et deux paliers 24 situés de part et d'autre du socle 9.

Les bielles latérales peuvent être identiques et distinctes.

D'une façon préférée, cette structure doublée est formée par des pièces monobloc. Ainsi comme on le voit aux figures 2, 3 et 5, les deux bielles triangulaires 14b sont formées d'une seule pièce (par exemple réalisée par fonderie) et dans laquelle les deux bielles latérales triangulaires 14b sont reliées par des entretoises 25. De même les deux bielles arrière 14a sont formée d'une seule pièce (réalisée par exemple par fonderie) et reliées par des entretoises 26 ainsi que par des structures tubulaires 27 disposées au niveau de chaque axe 15 et 16.

Le fonctionnement du dispositif peut cependant être expliqué en référence aux seules vues latérales des figures 4 et 6a à 6d.

Ainsi dans la suite de l'exposé, chaque fois qu'il est fait référence à une bielle 14a ou 14b, une genouillère 14, une forme de commande 13, une plaque 11, un ergot 20, un axe 8, 15, 16 ou 18, un ressort de rappel 22 ou une butée 21, on comprendra aisément que ces éléments sont doublés et que la cinématique décrite est reproduite de chaque côté du dispositif de remorquage 2, que ce soit par un doublage des pièces, ou bien par la réalisation de pièces monobloc comprenant deux parties qui sont symétriques l'une de l'autre par rapport à un plan vertical passant au milieu du dispositif de remorquage 2.

La forme de commande 13 est disposée verticalement entre l'axe 8 de pivot du support 7 et le troisième axe 18.

Ainsi l'ouverture de la rampe 3 (pivotement dans le sens des aiguilles d'une montre sur la figure 4) aura pour effet premier de pousser, par la languette 13a, l'ergot 20 vers la gauche sur la figure 4. Ce qui fera pivoter la deuxième bielle 14b dans le sens inverse des aiguilles d'une montre autour du troisième axe 18.

Les positions des différents axes 8, 15, 16 et 18 (donc aussi les dimensions des différentes pièces : socle 9 et support 7) sont choisies telles que, lorsque la rampe 3 est fermée (figure 4), le support 7 de crochet est sensiblement vertical et les bielles 14a et 14b forment un angle α inférieur à 180°. L'angle α est représenté à la figure 4, il s'agit de l'angle permettant le passage de la bielle 14a à la bielle 14b par une rotation dans le sens trigonométrique (ou sens inverse des aiguilles d'une montre). En d'autres termes, cet angle α est inferieur 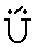 180° lorsque l'axe géométrique 15' du premier axe 15 se trouve entre l'axe de pivot 8 et la droite δ reliant le deuxième axe 16 et le troisième axe 18, ou encore lorsque le triangle dont les sommets sont les axes géométriques 15', 16' et 18' des premier axe 15, deuxième axe 16 et troisième axe 18 a son sommet 15' orienté vers l'axe de pivot 8 du support 7.

Une telle disposition de la genouillère 14 est stable. Un effort de traction F1 exercé sur le crochet 6 va avoir pour effet de faire pivoter la deuxième bielle 14b autour du troisième axe 18 dans le sens inverse des aiguilles d'une montre. Il en résultera un appui de l'ergot 20 contre la languette arrière 13b (effort F2), le système restant rigide.

A l'inverse, un effort de poussée F3 exercé sur le crochet 6 va faire pivoter la deuxième bielle 14b autour du troisième axe 18 dans le sens des aiguilles d'une montre, car l'angle α est inférieur à 180° et la genouillère 14 est stable.

Il en résultera un appui de l'ergot 20 contre la languette avant 13a (effort F4).

On notera que si l'angle α était supérieur à 180°, l'effort de poussée F3 aurait pour effet de faire pivoter la deuxième bielle 14b en sens inverse autour du troisième axe 18, donc ferait pivoter le support 7 de crochet vers l'arrière et le remorquage ne serait pas possible.

Il est donc essentiel que la genouillère 14 présente la configuration présentée à la figure 4.

A titre de variante, il est possible de ménager un léger jeu entre l'ergot 20 et la languette 13a et d'assurer ainsi un appui direct 28 de la deuxième bielle 14b sur le support 7. L'effort de poussée F3 sera alors équilibré par un effort F5 résultant du contact entre la deuxième bielle 14b et le support 7 au niveau de l'appui 28.

La figure 6a montre le début de l'ouverture de la rampe 3. La rampe pivote autour de son axe 5a (flèche O).

La forme de commande 13 provoque, par l'appui de la languette avant 13a, le pivotement de la deuxième bielle 14b autour du troisième axe 18 dans le sens inverse des aiguilles d'une montre (pivotement de la deuxième bielle 14b suivant la flèche B). Il en résulte une augmentation de l'angle α qui devient supérieur à 180°.

Ce nouvel angle α est représenté à la figure 6a, il s'agit toujours de l'angle permettant le passage de la bielle 14a à la bielle 14b par une rotation dans le sens trigonométrique (ou sens inverse des aiguilles d'une montre). En d'autres termes, cet angle α est supérieur à 180° lorsque la droite δ reliant le deuxième axe 16 et le troisième axe 18 se trouve entre l'axe de pivot 8 et l'axe géométrique 15' du premier axe 15, ou encore lorsque le triangle dont les sommets sont les axes géométriques 15', 16' et 18' des premier axe 15, deuxième axe 16 et troisième axe 18 a son sommet 15' orienté à l'opposé de l'axe de pivot 8 du support 7.

Avec un angle α supérieur à 180° la genouillère 14 s'ouvre et devient instable. Dans le même temps, comme on le voit à la figure 6a, le bras 12 solidaire de la rampe 3 vient en contact avec une butée 21 solidaire du support 7. Cette butée 21 est formée par un profil particulier du support 7.

Ainsi la poursuite du mouvement d'ouverture O va entraîner le pivotement du support 7 autour de son axe 8 avec la rampe 3.

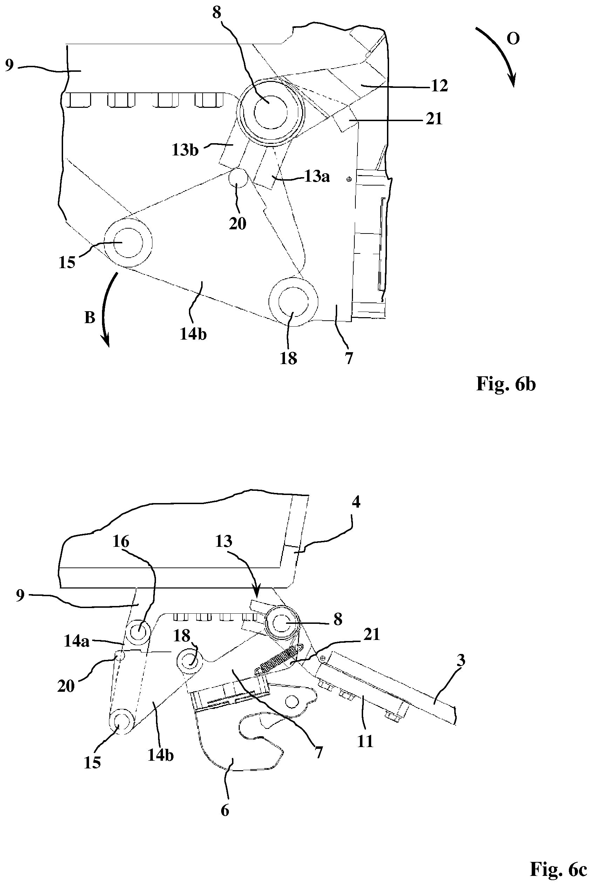

Comme on le voit à la figure 6b, la languette arrière 13b est légèrement plus courte que la languette avant 13a. L'ergot 20 échappe rapidement à la languette arrière 13b et le pivotement B de la deuxième bielle 14b peut se poursuivre.

La figure 6c montre la rampe 3 complètement ouverte. On voit que la première bielle 14a et la deuxième bielle 14b sont repliées l'une sur l'autre. Le second axe 16 et le troisième axe 18 se sont rapprochés et le support 7 du crochet 6 a basculé vers l'arrière avec la rampe 3. Dans cette position le crochet 6 ne gêne absolument pas l'emploi de la rampe 3.

On voit donc qu'il a été possible d'ouvrir la rampe 3 sans réaliser le moindre démontage du dispositif de remorquage 2.

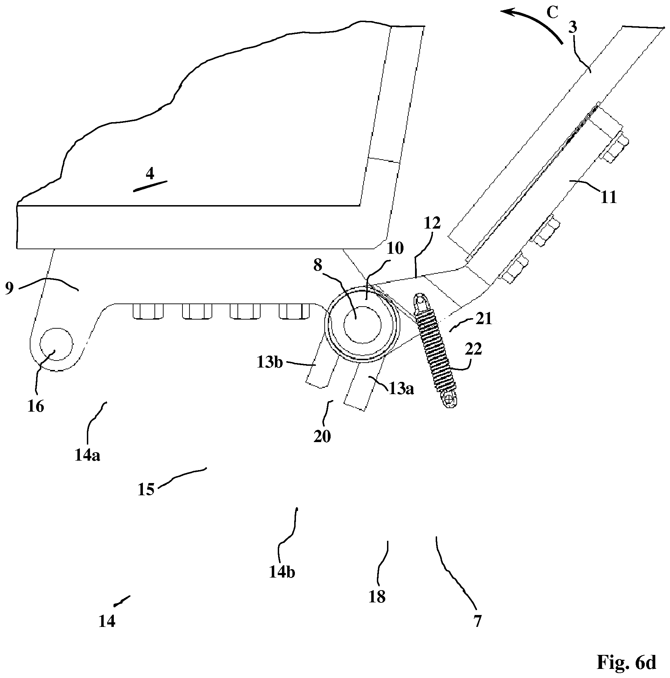

La figure 6d montre la fin du mouvement de fermeture de la rampe 3. Au cours de ce mouvement de fermeture, un premier ressort de rappel 22 (ressort qui peut bien sûr être doublé : un ressort de chaque côté du dispositif) assure le maintien du contact entre le support 7 et le bras 12 fixé à la rampe 3. Ce ressort 22 est un ressort de traction. Ainsi la fermeture de la rampe 3 (flèche C) va entraîner, grâce au ressort 22, le pivotement du support 7 dans le même sens que la rampe 3. Le support 7 accompagne la rampe 3 dans son mouvement.

La cinématique entièrement réversible du montage du dispositif de remorquage 2 conduit au re-positionnement de l'ergot 20 entre les deux languettes 13a et 13b de la pièce de commande 13. La figure 6d (fin de fermeture) est ainsi identique à la figure 6a (début d'ouverture).

On notera que le premier ressort de rappel 22 qui relie la rampe 3 et le support 7 (par l'intermédiaire du bras 12) assure le maintien du contact du bras 12 (donc indirectement de la rampe 3) avec la butée 20 du support.

Le premier ressort 22 assure ainsi la solidarisation du support 7 et du bras 12 (donc de la rampe 3) au cours des mouvements de fermeture et d'ouverture de la rampe.

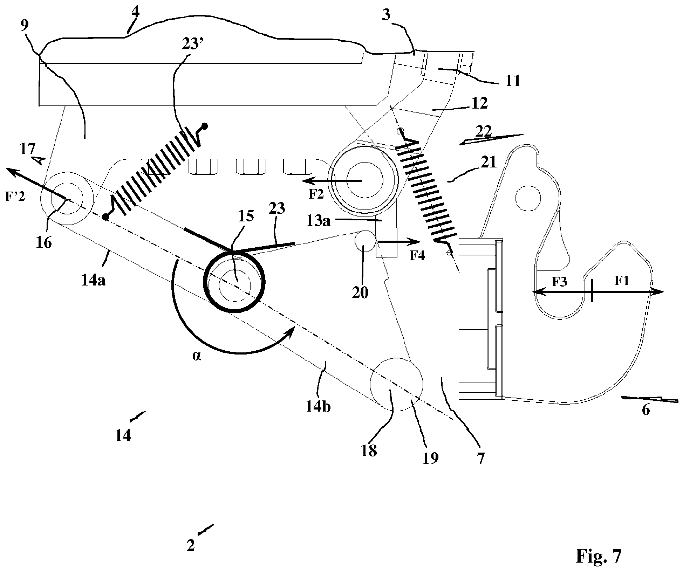

La figure 7 montre un autre mode de réalisation de l'invention.

Ce mode diffère du précédent en ce que la forme de commande 13 ne comporte qu'une seule languette 13a qui coopère avec l'ergot 20.

L'angle α entre la première bielle 14a et la deuxième bielle 14b est toujours inférieur à 180°.

Un second ressort de rappel 23 est prévu au niveau de la genouillère 14 pour assurer le positionnement de celle-ci avec un angle des bielles inférieur à 180°, lorsque la rampe est en position fermée.

Suivant l'exemple représenté, ce second ressort 23 est réalisé sous la forme d'un ressort de torsion qui est disposé au niveau du premier axe 15 d'articulation des bielles 14a et 14b. Il serait aussi possible de disposer le second ressort sous la forme d'un ressort de traction 23' interposé entre la première bielle 14a et le socle 9. On pourrait aussi utiliser un ressort de torsion disposé autour du premier axe 16 et ayant pour effet de rapprocher la première bielle 14a du socle 9. Le but est de maintenir, en position rampe fermée, une valeur de l'angle α qui soit inférieure à 180 ° pour que la genouillère 14 soit stable.

Ce mode de réalisation permet d'éviter une détérioration de la languette arrière 13b par l'ergot 20 comme suite aux efforts de traction.

Ainsi, lors d'une traction F1 exercée sur le crochet 6, l'ergot 20 se décollera de la languette 13a et l'angle α deviendra égal à 180°. Le système reste cependant stable en raison de la direction de l'effort F1.

L'effort de traction F1 engendre un effort F2 au niveau de l'axe 8 de pivot de support (comme d'ailleurs dans l'exemple précédent) mais aussi un effort F'2 suivant la direction de la ligne reliant les axes 15, 16 et 18.

Les deux bielles 14a et 14b qui sont alignées donnent une forte résistance au dispositif de remorquage.

Lorsque l'effort de traction F1 est remplacé par un effort de compression F3, le second ressort de rappel 23 (ou 23') permet de ramener la genouillère 14 à sa position stable (angle α des bielles inférieur à 180°). Ainsi L'effort de compression F3 conduit comme dans l'exemple précédent à un effort F4 exercé par l'ergot 20 sur la languette 13a et le dispositif reste rigide.

La cinématique d'ouverture est la même que pour le mode de réalisation précédent et il n'est donc pas nécessaire de détailler d'autres figures. Le premier ressort de traction 22 assure comme précédemment le maintien du bras 12 en contact avec la butée 21 du support 7.

Comme dans le mode de réalisation précédent, la structure du dispositif peut là aussi être doublée et comporter des bielles de chaque côté du dispositif et en particulier formées de pièces monobloc comprenant deux parties qui sont symétriques l'une de l'autre par rapport à un plan vertical passant au milieu du dispositif de remorquage 2.

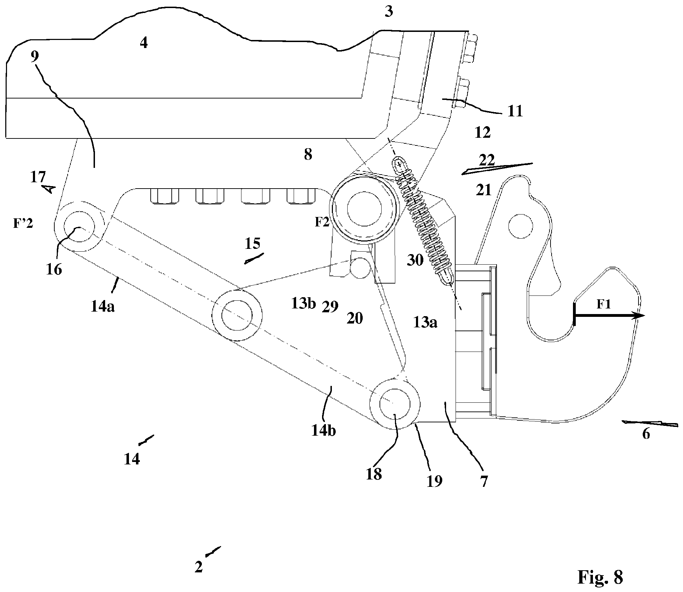

La figure 8 montre un troisième mode de réalisation dans lequel les languettes 13a et 13b sont légèrement mobiles l'une par rapport à l'autre et maintenues en position parallèle (comme sur la figure 4) par un ressort 29 qui forcera le contact de la languette 13b (languette mobile) sur une butée 30 aménagée sur la languette 13a (languette fixe).

On a ici représenté un ressort 29 de traction. Il est aussi possible de monter la languette mobile 13b sur un axe parallèle à l'axe pivot de support 8 et prévoir un ressort de torsion autour de cet axe de pivot de languette.

Ce ressort 29 sera dimensionné de la façon suivante : l'effort fournit par ce ressort sera suffisant pour que la languette mobile 13b ne bouge pas sous l'effet des efforts générés par le contact de l'ergot 20 (efforts liés entre autres à la gravité et à l'action du ressort 22).

L'effort fournit par ce ressort 29 sera cependant trop faible pour s'opposer à la force F2. Ainsi lors d'un effort de traction F1 (figure 8), l'effort F2 amènera les languettes 13a,13b à s'écarter l'une de l'autre et les bielles 14a et 14b s'aligneront comme dans le cas décrit en référence à la figure 7. On obtient ainsi la forte résistance assurée par les deux bielles 14a et 14b alignées tout en évitant la détérioration de la languette 13b.

La languette fixe 13a joue le même rôle que dans les autres variantes du dispositif.

Le nouveau ressort 29 disposé entre les languettes 13a et 13b joue alors le même rôle que le ressort 23 ou 23' de maintien en position stable de la genouillère du second mode de réalisation. Ce ressort associé à la languette mobile 13b permet ainsi de ramener la genouillère 14 en position stable.

A titre de variante, pour l'un ou pour les autres modes de réalisation, il serait possible avec un dispositif comportant des bielles monobloc doublées de ne prévoir qu'une seule forme de commande 13, un seul ergot 20 et un seul premier ressort 22. Il est cependant préféré de doubler les formes de commande, l'ergot et le premier ressort pour une meilleure répartition des efforts et une limitation de l'usure.

## Revendications

1. Dispositif de remorquage (2) pour un véhicule doté d'une rampe d'accès arrière (3) montée basculante par rapport à une caisse (4) du véhicule sur des charnières (5) ayant un axe horizontal (5a), ou axe de rampe, dispositif de remorquage comportant un crochet (6) qui est solidaire d'un support (7) qui est destiné à être monté pivotant par rapport à la caisse (4), dispositif dans lequel :
- le support (7) affecte la forme d'un bloc sur lequel est fixé le crochet (6), bloc destiné à être monté pivotant par rapport à la caisse (4) au niveau d'un axe de pivot (8) du support (7) qui est destiné à être monté de façon coaxiale à l'axe de la rampe (3), et
- le support (7) est destiné à être relié à la caisse (4) par l'intermédiaire d'au moins une genouillère (14) constituée par deux bielles (14a,14b) articulées entre elles au niveau d'un premier axe (15), une première bielle (14a) étant articulée par rapport à la caisse (4) au niveau d'un deuxième axe (16),
le **dispositif étant caractérisé en ce que** une deuxième bielle (14b) est articulée par rapport au support (7) au niveau d'un troisième axe (18) disposé en dessous de l'axe de pivot (8), les premier, deuxième et troisième axes étant tous parallèles à l'axe de pivot (8) du support, et
- la deuxième bielle (14b) porte au moins un ergot (20) venant en butée contre au moins une forme de commande (13) solidaire de la rampe (3) et disposée entre l'axe de pivot (8) de support (7) et le troisième axe (18), et
- les positions des différents axes sont choisies telles que, lorsque le dispositif (2) est fixé à un véhicule dont la rampe (3) est fermée, le support (7) de crochet est sensiblement vertical et les bielles (14a,14b) forment un angle (α) inférieur à 180°, le triangle dont les sommets sont les axes géométriques (15',16',18') des premier (15), deuxième (16) et troisième (18) axes ayant ainsi son sommet (15') correspondant au premier axe (15) qui est orienté vers l'axe de pivot (8) du support (7), et
- l'ouverture de la rampe (3) provoque, par l'intermédiaire de la ou des formes de commande (13), une ouverture de la genouillère (14) avec un angle (α) des bielles (14a,14b) supérieur à 180°, le triangle dont les sommets sont les axes géométriques (15',16',18') des premier (15), deuxième (16) et troisième (18) axes ayant ainsi son sommet (15') correspondant au premier axe (15) qui est orienté à l'opposé de l'axe de pivot (8) du support (7), la rampe (3) coopérant par ailleurs lors de son ouverture avec une butée (21) du support de crochet entraînant le pivotement du support (7) avec la rampe (3).

2. Dispositif de remorquage selon la revendication 1, **caractérisé en ce qu'**au moins un premier ressort de rappel (22) relie la rampe (3) et le support (7) et permet d'assurer, lors de la fermeture et de l'ouverture de la rampe (3), le contact de celle-ci avec la butée (21) du support (7).

3. Dispositif de remorquage selon une des revendications 1 ou 2, **caractérisé en ce qu'**il comporte un socle (9) destiné à être fixé au niveau d'une paroi inférieure de la caisse (4), socle comportant au moins un palier avant (24) recevant l'axe de pivot (8) du support (7) et au moins un palier arrière (17) recevant la première bielle (14a).

4. Dispositif de remorquage selon une des revendications 1 à 3, **caractérisé en ce que** la forme de commande (13) est solidaire d'une plaque (11) destinée à être rendue solidaire de la rampe (3) du véhicule.

5. Dispositif de remorquage selon une des revendications 1 à 4, **caractérisé en ce que** la forme de commande (13) comporte deux languettes parallèles (13a,13b), l'ergot (20) se positionnant entre les deux languettes.

6. Dispositif de remorquage selon la revendication 5, **caractérisé en ce que** les deux languettes (13a,13b) sont mobiles l'une par rapport à l'autre et reliées par un ressort 29) dimensionné pour ramener, en position rampe (3) fermée et en l'absence d'effort de traction, la genouillère (14) avec un angle (α) des bielles (14a,14b) inférieur à 180°, le triangle dont les sommets sont les axes géométriques (15',16',18') des premier (15), deuxième (16) et troisième (18) axes ayant ainsi son sommet (15') correspondant au premier axe (15) qui est orienté vers l'axe de pivot (8) du support (7).

7. Dispositif de remorquage selon une des revendications 1 à 4, **caractérisé en ce que** la forme de commande (13) ne comporte qu'une languette (13a) coopérant avec l'ergot (20), au moins un second ressort de rappel (23,23') étant prévu au niveau de la genouillère (14) pour assurer le positionnement de celle-ci avec un angle (α) des bielles (14a,14b) inférieur à 180°, le triangle dont les sommets sont les axes géométriques (15',16',18') des premier (15), deuxième (16) et troisième (18) axes ayant ainsi son sommet (15') correspondant au premier axe (15) qui est orienté vers l'axe de pivot (8) du support (7), lorsque la rampe (3) est en position fermée.

8. Dispositif de remorquage selon la revendication 7, **caractérisé en ce que** le second ressort (23) est un ressort de torsion disposé au niveau du premier axe (15) d'articulation des bielles (14a,14b).

9. Dispositif de remorquage selon la revendication 7, **caractérisé en ce que** le second ressort (23') est un ressort de traction disposé entre la première bielle (14a) et le socle (9).

10. Véhicule doté d'une rampe d'accès arrière (3) montée basculante par rapport à une caisse (4) du véhicule sur des charnières (5) ayant un axe (5a) horizontal, ou axe de rampe, véhicule **caractérisé en ce qu'**il comporte un dispositif de remorquage (2) selon une des revendications précédentes.

## Patentansprüche

1. Abschleppvorrichtung (2) für ein Fahrzeug, das mit einer hinteren Zugangsrampe (3) ausgestattet ist, die mit Bezug auf einen Aufbau (4) des Fahrzeugs an Scharnieren (5) mit einer horizontalen Achse (5a) oder Rampenachse kippbar montiert ist, wobei die Abschleppvorrichtung einen Haken (6) umfasst, der einstückig mit einer Abstützung (7) ausgebildet ist, die zum relativ zum Aufbau (4) schwenkenden Montieren ausgelegt ist, wobei in der Vorrichtung:
- die Abstützung (7) die Form eines Blocks beeinflusst, an dem der Haken (6) befestigt ist, wobei der Block zum relativ zum Aufbau (4) schwenkenden Montieren an einer Schwenkachse (8) der Abstützung (7) ausgelegt ist, die zum koaxialen Montieren an der Achse der Rampe (3) ausgelegt ist, und
- die Abstützung (7) zum Verbinden mit dem Aufbau (4) über wenigstens ein Kniegelenk (14) ausgelegt ist, das von zwei Verbindungsstangen (14a, 14b) gebildet wird, die an einer ersten Achse (15) aneinander angelenkt sind, wobei eine erste Verbindungsstange (14a) mit Bezug auf den Aufbau (4) an einer zweiten Achse (16) angelenkt ist, wobei die Vorrichtung **dadurch gekennzeichnet ist, dass** eine zweite Verbindungsstange (14b) mit Bezug auf die Abstützung (7) an einer dritten Achse (18) angelenkt ist, die unterhalb der Schwenkachse (8) angeordnet ist, wobei die erste, zweite und dritte Achse parallel zur Schwenkachse (8) der Abstützung sind, und
- die zweite Verbindungsstange (14b) wenigstens einen Zapfen (20) trägt, der an wenigstens einer Steuerform (13) zur Anlage kommt, die einstückig mit der Rampe (3) und zwischen der Schwenkachse (8) der Abstützung (7) und der dritten Achse (18) angeordnet ist, und
- die Positionen von verschiedenen Achsen so gewählt werden, dass, wenn die Vorrichtung (2) an einem Fahrzeug befestigt ist, dessen Rampe (3) geschlossen ist, die Hakenabstützung (7) im Wesentlichen vertikal ist und die Verbindungsstangen (14a, 14b) einen Winkel (α) kleiner als 180° bilden, wobei das Dreieck, dessen Scheitelpunkte die geometrischen Achsen (15', 16', 18') der ersten (15), zweiten (16) und dritten (18) Achse sind, somit einen Scheitelpunkt (15') entsprechend der ersten Achse (15) hat, die zur Drehachse (8) der Abstützung (7) hin orientiert ist, und
- das Öffnen der Rampe (3) mittels der Steuerform(en) (13) ein Öffnen des Kniegelenks (14) mit einem Winkel (α) der Verbindungsstangen (14a, 14b) von mehr als 180° hervorruft, wobei das Dreieck, dessen Scheitelpunkte die geometrischen Achsen (15', 16', 18') der ersten (15), zweiten (16) und dritten (18) Achse sind, ebenso einen Scheitelpunkt (15') entsprechend der ersten Achse (15) hat, die entgegengesetzt zur Schwenkachse (8) der Abstützung (7) orientiert ist, wobei die Rampe (3) ferner bei ihrem Öffnen mit einem Widerlager (21) der Hakenabstützung zusammenwirkt und das Schwenken der Abstützung (7) mit der Rampe (3) bewirkt.

2. Abschleppvorrichtung nach Anspruch 1, **dadurch gekennzeichnet, dass** wenigstens eine Rückstellfeder (22) die Rampe (3) und die Abstützung (7) verbindet und es zulässt, beim Schließen und Öffnen der Rampe (3) den Kontakt derselben mit dem Widerlager (21) der Abstützung (7) zu gewährleisten.

3. Abschleppvorrichtung nach Anspruch 1 oder 2, **dadurch gekennzeichnet, dass** sie einen Fuß (9) zum Befestigen an einer unteren Wand des Aufbaus (4) umfasst, wobei der Fuß wenigstens ein vorderes Lager (24) umfasst, das die Schwenkachse (8) der Abstützung (7) aufnimmt, und wenigstens ein hinteres Lager (17), das die erste Verbindungsstange (14a) aufnimmt.

4. Abschleppvorrichtung nach einem der Ansprüche 1 bis 3, **dadurch gekennzeichnet, dass** die Steuerform (13) einstückig mit einer Platte (11) ist, die so ausgelegt ist, dass sie einstückig mit der Rampe (3) des Fahrzeugs gemacht wird.

5. Abschleppvorrichtung nach einem der Ansprüche 1 bis 4, **dadurch gekennzeichnet, dass** die Steuerform (13) zwei parallele Zungen (13a, 13b) umfasst, wobei sich der Zapfen (20) zwischen den beiden Zungen befindet.

6. Abschleppvorrichtung nach Anspruch 5, **dadurch gekennzeichnet, dass** die beiden Zungen (13a, 13b) relativ zueinander beweglich und durch eine Feder (29) verbunden sind, die so dimensioniert ist, dass sie in der geschlossenen Rampenposition (3) und bei fehlender Zugkraft das Kniegelenk (14) mit einem Winkel (α) der Verbindungsstangen (14a, 14b) von kleiner als 180° mitnimmt, wobei das Dreieck, dessen Scheitelpunkte die geometrischen Achsen (15', 16', 18') der ersten (15), zweiten (16) und dritten (18) Achse sind, einen Scheitelpunkt (15') entsprechend der ersten Achse (15) hat, die in Richtung des Schwenkpunkts (8) der Abstützung (7) orientiert ist.

7. Abschleppvorrichtung nach einem der Ansprüche 1 bis 4, **dadurch gekennzeichnet, dass** die Steuerform (13) nur eine Zunge (13a) aufweist, die mit dem Zapfen (20) zusammenwirkt, wobei wenigstens eine Rückstellfeder (23, 23') am Kniegelenk (14) vorgesehen ist, um die Positionierung desselben mit einem Winkel (α) der Verbindungsstangen (14a, 14b) von kleiner als 180° zu gewährleisten, wobei das Dreieck, dessen Scheitelpunkte die geometrischen Achsen (15', 16', 18') der ersten (15), zweiten (16) und dritten (18) Achse sind, den Scheitelpunkt (15') entsprechend der ersten Achse (15) hat, die zur Drehachse (8) der Abstützung (7) hin orientiert ist, wenn die Rampe (3) in einer geschlossenen Position ist.

8. Abschleppvorrichtung nach Anspruch 7, **dadurch gekennzeichnet, dass** die zweite Feder (23) eine Torsionsfeder ist, die an der ersten Gelenkachse (15) der Verbindungsstangen (14a, 14b) angeordnet ist.

9. Abschleppvorrichtung nach Anspruch 7, **dadurch gekennzeichnet, dass** die zweite Feder (23') eine Traktionsfeder ist, die zwischen der ersten Verbindungsstange (14a) und dem Fuß (9) angeordnet ist.

10. Fahrzeug, ausgestattet mit einer hinteren Zugangsrampe (3), die mit Bezug auf einen Aufbau (4) des Fahrzeugs an Scharnieren (5) mit einer horizontalen Achse (5a) oder Rampenachse kippbar montiert ist, wobei das Fahrzeug **dadurch gekennzeichnet ist, dass** es eine Abschleppvorrichtung (2) nach einem der vorherigen Ansprüche umfasst.

## Claims

1. Towing device (2) for a vehicle equipped with a rear access ramp (3) mounted so as to pivot in relation to a body (4) of the vehicle on hinges (5) having a horizontal axis (5a), or ramp axis, the towing device comprising a hook (6) which is integrally locked to a carrier (7) which is designed to be mounted so as to be able to pivot in relation to the body (4), in which device:
- the carrier (7) takes the form of a block on which the hook (6) is fixed, the block being designed to be mounted so as to be able to pivot in relation to the body (4) on a pivot shaft (8) of the carrier (7) which is designed to be mounted coaxially with the axis of the ramp (3), and
- the carrier (7) is designed to be connected to the body (4) through the intermediary of at least one toggle joint (14) formed by two rods (14a, 14b) articulated with one another on a first shaft (15), a first rod (14a) being articulated in relation to the body (4) on a second shaft (16),
the device being **characterised in that** a second rod (14b) is articulated in relation to the carrier (7) on a third shaft (18) disposed underneath the pivot shaft (8), the first, second and third shafts all being parallel with the pivot shaft (8) of the carrier, and
- the second rod (14b) carries at least one lug (20) abutting against at least one control element (13) integrally locked to the ramp (3) and disposed between the pivot shaft (8) of the carrier (7) and the third shaft (18), and
- the positions of the different shafts are chosen such that when the device (2) is fixed to a vehicle the ramp (3) of which is closed, the carrier (7) of the hook is substantially vertical and the rods (14a, 14b) form an angle (α) of less than 180°, the triangle the vertices of which are the geometric axes (15', 16', 18') of the first (15), second (16) and third (18) shafts thus having its vertex (15') corresponding to the first shaft (15) which is oriented towards the pivot shaft (8) of the carrier (7), and
- the opening of the ramp (3) causes, through the intermediary of the control element or elements (13), the opening of the toggle joint (14) with an angle (α) of the rods (14a, 14b) greater than 180°, the triangle the vertices of which are the geometric axes (15', 16', 18') of the first (15), second (16) and third (18) shafts thus having its vertex (15') corresponding to the first shaft (15) which is oriented in the opposite direction to the pivot shaft (8) of the carrier (7), the ramp (3) also cooperating when opened with a stop (21) of the carrier of the hook leading to the pivoting of the carrier (7) with the ramp (3).

2. Towing device according to claim 1, **characterised in that** at least one first return spring (22) connects the ramp (3) and the carrier (7) and when the ramp (3) is closed and opened, allows the contact of the latter with the stop (21) of the carrier (7).

3. Towing device according to one of claims 1 or 2, **characterised in that** it comprises a base (9) designed to be fixed to a lower wall of the body (4), the base comprising at least one front bearing (24) receiving the pivot shaft (8) of the carrier (7), and at least one rear bearing (17) receiving the first rod (14a).

4. Towing device according to one of claims 1 to 3, **characterised in that** the control element (13) is integrally locked to a plate (11) designed to be locked integrally to the ramp (3) of the vehicle.

5. Towing device according to one of claims 1 to 4, **characterised in that** the control element (13) comprises two parallel tongues (13a, 13b), the lug (20) positioning itself between the two tongues.

6. Towing device according to claim 5, **characterised in that** the two tongues (13a, 13b) are able to move one in relation to the other and connected by a spring (29) dimensioned in order to return the toggle joint (14) with an angle (α) of the rods (14a, 14b) of less than 180° when the ramp (3) is in the closed position and in the absence of any traction force, the triangle the vertices of which are the geometric axes (15', 16', 18') of the first (15), second (16) and third (18) shafts thus having its vertex (15') corresponding to the first shaft (15) which is oriented towards the pivot shaft (8) of the carrier (7).

7. Towing device according to one of claims 1 to 4, **characterised in that** the control element (13) only comprises one tongue (13a) cooperating with the lug (20), at least one second return spring (23, 23') being provided on the toggle joint (14) to ensure the positioning of the latter with an angle (α) of the rods (14a, 14b) of less than 180°, the triangle the vertices of which are the geometric axes (15', 16', 18') of the first (15), second (16) and third (18) shafts thus having its vertex (15') corresponding to the first shaft (15) which is oriented towards the pivot shaft (8) of the carrier (7), when the ramp (3) is in the closed position.

8. Towing device according to claim 7, **characterised in that** the second spring (23) is a torsion spring disposed on the first shaft (15) for articulation of the rods (14a, 14b).

9. Towing device according to claim 7, **characterised in that** the second spring (23') is a tension spring disposed between the first rod (14a) and the base (9).

10. Vehicle equipped with a rear access ramp (3) mounted so as to pivot in relation to a body (4) of the vehicle on hinges (5) having a horizontal axis (5a), or ramp axis, the vehicle being **characterised in that** it comprises a towing device (2) according to one of the preceding claims.
